(19) Europäisches Patentamt
European Patent Office
Office européen des brevets

(11) Veröffentlichungsnummer : **0 022 522**
**B1**

(12) # EUROPÄISCHE PATENTSCHRIFT

(45) Veröffentlichungstag der Patentschrift : **19.05.82**

(51) Int. Cl.[3] : **C 04 B 35/56**

(21) Anmeldenummer : **80103783.9**

(22) Anmeldetag : **03.07.80**

(54) **Dichte Formkörper aus polykristallinem Beta-Siliciumcarbid und Verfahren zu ihrer Herstellung durch Heisspressen.**

(30) Priorität : **05.07.79 DE 2927226**

(43) Veröffentlichungstag der Anmeldung : **21.01.81 (Patentblatt 81/03)**

(45) Bekanntmachung des Hinweises auf die Patenterteilung : **19.05.82 Patentblatt 82/20**

(84) Benannte Vertragsstaaten : **AT BE CH DE FR GB IT LI NL SE**

(56) Entgegenhaltungen :
**EP - A - 0 004 031**
**DE - A - 2 813 665**
**DE - B - 2 848 377**
**GE - A - 2 017 070**
**GB - A - 2 031 027**
**US - A - 3 836 673**
**US - A - 4 108 929**

**A.D.-REPORT 779 053 (SRD-74-040) April 1974 S. PROCHAZKA : « Investigation of ceramics for high-temperature turbine vanes ».**

**Internationale Veröffentlichung WO 79/00178**

**CHEMICAL ABSTRACTS, Band 89, Nr. 2 10. July 1978, Seite 289, Zusammenfassung 10867q Columbus, Ohio, US.**

(73) Patentinhaber : **Elektroschmelzwerk Kempten GmbH**
**Herzog-Wilhelm-Strasse 16**
**D-8000 München 2 (DE)**

(72) Erfinder : **Kriegesmann, Jochen, Dr.**
**Vorwaldstrasse 75**
**D-8961 Durach-Bechen (DE)**
Erfinder : **Lipp, Alfred, Dr.**
**Bürgermeister-Singer-Strasse 15**
**D-8939 Bad Wörishofen (DE)**
Erfinder : **Reinmuth, Klaus, Dr.**
**An der Halde 21**
**D-8961 Durach (DE)**

**EP 0 022 522 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Dichte Formkörper aus polykristallinem beta-Siliciumcarbid und Verfahren zu ihrer Herstellung durch Heißpressen

Formkörper aus polykristallinem Siliciumcarbid sind bereits bekannt. Sie zeichnen sich durch eine Kombination wertvoller Eigenschaften aus, wie Oxydationsbeständigkeit und Temperaturwechselbeständigkeit, günstiges Kriechverhalten, relativ niedrige Dichte, geringe thermische Ausdehnung sowie hohe Wärmeleitfähigkeit und große Härte. Aufgrund dieser Eigenschaften können sie daher beispielsweise als Werkstoffe für Verbrennungsrohre, Wärmeaustauschvorrichtungen oder Raketendüsen eingesetzt werden. Wegen ihrer guten mechanischen Eigenschaften finden sie ferner auf dem Gebiet der Verschleißtechnik Verwendung und wegen der Störstellen-Leitfähigkeit des Siliciumcarbids in der Elektronik und Elektrotechnik.

Es ist jedoch ebenfalls bekannt, daß sich reines Siliciumcarbid, auch unter Anwendung von Druck, nicht bis zu theoretischen Dichte von 100 % verdichten läßt. Aus diesem Grunde sind bereits verschiedene Zusätze als Sinterhilfsmittel bekannt geworden, die in Abhängigkeit von dem jeweils angewendeten Verfahren zu mäßig dichten bis dichten Formkörpern führen. Hohe Dichte allein ist jedoc kein ausschlaggebendes Kriterium für eine hohe Warmfestigkeit des betreffenden körpers, worunter zu verstehen ist, daß eine hohe mechanische Festigkeit, zu deren Charakterisierung die Biegebruchfestigkeit dient, auch bei hohen Temperaturen, das heißt, bis zu etwa 1 500 °C und höher, unverändert erhalten bleibt. Eine hohe Warmfestigkeit ist aber insbesondere für die Verwendung der Formkörper als Werkstoffe im Hochtemperatur-Maschinenbau, beispielsweise für Heißgasturbinen, von entscheidender Bedeutung, die Arbeitstemperaturen in diesem Bereich ausgesetzt sind.

Das älteste der bekannten Verfahren zur Herstellung von dichten Siliciumcarbidfomrkörpern beruht auf der sogenannten Reaktionssinterung, bei dem Siliciumcarbidpulver mit Kohlenstoff und/oder einem organischen Harzbindemittel unter Bildung von vorgeformten Körpern verarbeitet wird, die anschließend in Gegenwart einer Silicium enthaltenden Atmosphäre erhitzt werden. Der Kohlenstoff reagiert dabei mit dem Silicium unter Bildung von zusätzlichem SiC, wodurch eine Verbindung der bereits vorliegenden SiC-Körner erreicht wird. Vorhandene Löcher werden gleichzeitig mit überschüssigem Silicium ausgefüllt. Die so erhaltenen Sinterkörper weisen zwar eine sehr hohe Dichte auf, da sie praktisch porenfrei sind, aber sie enthalten freies Silicium. Ihrer Verwendung als Werkstoffe im Hochtemperaturmaschinenbau sind daher enge Grenzen gesetzt, da sie bei Temperaturen oberhalb von 1 400 °C zum Ausschwitzen von Silidium (Fp 1 440 °C) neigen.

Dichte Siliciumcarbidformkörper können ferner nach dem sogenannten Heißpreß- oder Drucksinterverfahren unter Verwendung von Aluminium oder Bor enthaltenden Zusätzen als Sinterhilfsmittel hergestellt werden.

So werden beispielsweise in der US-A 3 836 673 (die der DE-B 23 14 384 entspricht) dichte, heißgepreßte Formkörper aus feinkörnigem α-Siliciumcarbid beschrieben, die 0,5 bis 5 Gew.% Aluminium enthalten, das bei der Röntgenbeugungsanalyse nicht als getrennte Phase erscheint. Für die Herstellung ist ein 15 bis 60 Stunden dauernder Mahlvorgang des pulverförmigen Ausgangsgemisches vor dem Heißpressen notwendig, und es wird betont, daß die Festigkeit des fertig gepreßten Körpers in direkter Beziehung zur Mahlzeit steht. Diese Formkörper haben zwar bei Raumtemperatur eine Biegebruchfestigkeit von über 7 000 kp/cm$^2$ (= 687 N/mm$^2$), die jedoch mit steigender Temperatur stark abfällt und bei 1 500 °C nur noch etwa 3 140 kp/cm$^2$ (= 308 N/mm$^2$) beträgt. Derartige Formkörper sind daher nicht hochwarmfest, was auch durch einen im wesentlichen interkristallinen Bruchmodus bestätigt wird.

Aus der US-A 3 853 566 (die der DE-A 23 63 036 entspricht) sind hingegen heißgepreßte Formkörper aus feinkörnigem β-Siliciumcarbid bekannt, die mittels eines Bor enthaltenden Zusatzes oder Borcarbid hergestellt worden sind. Diese Formkörper haben bei Raumtemperatur eine Biegebruchfestigkeit von nur etwa 5 600 kp/cm$^2$ (= 549 N/mm$^2$), die aber bis etwa 1 400 °C unverändert bleibt und erst ab 1 600 °C auf Werte unter 4 000 kp/cm$^2$ (= 392 N/mm$^2$) absinkt, und der Bruchmodus ist sowohl bei Raumtemperatur als auch bei höheren Temperaturen transkristallin. (Eine Zusammenstellung über Biegebruchfestigkeit und Bruchmodus der oben genannten Sinterkörper wurde von J. W. Edington et al. in « Powder Metallurgy International », Vol. 7, Nr. 2, Seite 82 ff (1975) vorgenommen.)

Da aber offensichtlich beim Heißpressen von Siliciumcarbid mit Borzusatz ein übertriebenes Kornwachstum auftritt, das für die mäßigen mechanischen Festigkeitseigenschaften verantwortlich ist, wird in der US-A 4 108 929 (die der GB-A 1 473 911 entspricht) ein Verfahren zum Heißpressen von Siliciumcarbid mit Borzusatz und einem Kohlenstoff enthaltenden Zusatz beschrieben, wonach SiC-Körper, die jedoch von elementarem Kohlenstoff in Form kleiner Partikel durchsetzt sind, erhalten werden, mit verbesserten Hochtemperatureigenschaften. Wie aus den Beispielen ersichtlich, bei welchen β-SiC als Ausgangsmaterial verwendet wurde, liegen die besten Werte für die Biegefestigkeit (gemessen nach der 3-Punktmethode) bei Raumtemperatur bei 493,7 N/mm$^2$ (71 900 psi) und bei 1 500 °C bei 590,6 N/mm$^2$ (86 100 psi). Das Kornwachstum kann jedoch trotz des Kohlenstoffzusatzes nur durch Einhaltung ganz bestimmter Bedingungen hinsichtlich Druck (10 000 psi) und Temperatur (1 950 °C) in Grenzen gehalten werden, wobei insbesondere die Einhaltung eines derartig eng begrenzten Temperaturbereichs hohe Anforderungen an eine exakte Temperaturregelung stellt, die in diesem Bereich nur schwierig durchführbar ist. Die Übertragung eines derartigen Verfahrens in den großtechnischen Bereich ist daher mit einem ungewöhnlich hohen Aufwand verbunden.

Eine bessere Kontrolle des Kornwachstums beim Heißpressen von SiC kann indessen durch Verwendung von Bornitrid als Sinterhilfsmittel erreicht werden, wie aus dem in der US-A 3 954 483 beschriebenen Verfahren hervorgeht. Die so hergestellten Körper aus β-SiC zeigen jedoch weniger gute mechanische Festigkeitseigenschaften, das heißt, die Werte für die Biegefestigkeit bei Raumtemperatur liegen bei 476 $N/mm^2$ (69 000 psi) und bei 1 500 °C bei 531 $N/mm^2$ (77 000 psi). Darüber hinaus muß die Erzielung des einheitlichen Mikrogefüges durch eine geringere Dichte erkauft werden, die praktisch im Bereich von 98 % der theoretischen Dichte von SiC (im folgenden als %TD abgekürzt) liegt und nur durch die zusätzliche Mitverwendung von Bor in Form von elementarem Bor oder Borcarbid bis zur annähernd theoretischen Dichte gesteigert werden kann.

Die Verwendung von Siliciumnitrid anstelle von Bornitrid als Sinterhilfsmittel beim Heißpressen von SiC wird in den US-A 3 960 577 und US-A 3 968 194 beschrieben. Für den Einsatz des Siliciumnitrids sind jedoch relativ große Mengen notwendig (3,5 %-10 %), und darüber hinaus ist die Mitverwendung von Bor in Form von elementarem Bor oder Borcarbid unbedingt erforderlich. Wie aus den Beispielen ersichtlich ist, wird unter Einsatz von β-SiC, Zusatz von 1 % Bor und 5 % $Si_3N_4$ ein Formkörper erhalten, der bei Raumtemperatur eine Biegefestigkeit von über 600 $N/mm^2$ ($1,03 \times 10^5$ psi) zeigt. Über die Biegefestigkeit bei höheren Temperaturen werden jedoch keine Angaben gemacht. Siliciumnitrid (bis zu 5 %) soll durch Röntgenbeugungsanalyse nicht als getrennte Phase nachweisbar sein. Für die Herstellung dieser Körper sind wiederum sehr eng begrenzte Bedingungen hinsichtlich Druck (10 000 psi) und Temperatur (1 950 °C) erforderlich, was in diesem Fall wegen der bekannten Zersetzungsneigung von Siliciumnitrid ab etwa 1 800 °C zwingend geboten ist. Dennoch ist nicht auszuschließen, daß sich Siliciumnitrid unter den gegebenen Bedingungen unter Bildung einer metallischen Si-Phase zersetzt, die dann die Festigkeitseigenschaften des Sinterkörpers bei 1 500 °C beeinträchtigt.

Diese Nachteile werden auch durch US-A 4 023 975 bestätigt, in der ein Verfahren zum Heißpressen von SiC unter Verwendung von Berylliumcarbid als Sinterhilfsmittel beschrieben wird, das vor allem die Vorteile haben soll, daß das Heißpressen in einem breiteren Temperaturbereich durchgeführt werden kann und die so erhaltenen Sinterkörper frei von glasartigen und metallischen Si-Phasen sind, durch welche die mechanischen Festigkeitseigenschaften bei erhöhter Temperatur störend beeinflußt werden. Die nach diesem Verfahren hergestellten Sinterkörper weisen jedoch Gefügekorngrößen bis zu 50 μm auf, und außerdem ist Berylliumcarbid als getrennte Phase nachweisbar. Über die mechanischen Festigkeitswerte werden keine Zahlenangaben gemacht. Die 2-Phasigkeit der Körper und das relativ grobkörnige Mikrogefüge lassen jedoch keine hohen Werte für die mechanische Festigkeit erwarten.

Mit Hilfe des Heißpreß- oder Drucksinterverfahrens ist es somit möglich, polykristalline SiC-Formkörper mit geringer Porosität herzustellen, wobei sich zur Erzielung einer hohen Dichte (mindestens 99 %TD) und eines feinkörnigen Mikrogefüges (durchschnittliche Korngröße im Bereich von etwa 5 μm), das praktisch einphasig ist, in Verbindung mit einem breiten Temperaturbereich beim Heißpreßvorgang, was aus verfahrenstechnischen Gründen vorteilhaft ist, der Zusatz von Aluminium als Sinterhilfsmittel bisher am besten bewährt hat.

Leider zeigen jedoch derartige Aluminium enthaltende SiC-Sinterkörper eine mit steigender Temperatur stark abfallende mechanische Festigkeit, was vermutlich darauf zurückzuführen ist, daß durch den Aluminiumzusatz an den Korngrenzen eine glasartige Alumosilicatschicht gebildet worden ist, die unter Belastung bei erhöhter Temperatur einen Korngrenzengleitvorgang auslöst, der zu einer unterkritischen Rißausbreitung führt. Diese Annahme wird durch die Tatsache bestätigt, daß derartige SiC-Körper einen interkristallinen Bruchmodus zeigen, da eine unterkritische Rißausbreitung nach dem Korngrenzengleitmodell nur bei interkristallinem Bruch möglich ist.

Bei einem transkristallinen Bruchmodus nimmt hingegen in der Regel die Festigkeit bei Erhöhung der Temperatur nicht ab, das heißt, in diesem Fall ist die unterkritische Rißausbreitung auch bei hohen Temperaturen nur von geringem Einfluß.

Es stellt sich somit die Aufgabe, Formkörper aus polykristallinem Siliciumcarbid mit verbesserten Eigenschaften, insbesondere verbesserter Oxydationsbeständigkeit und mechanischen Eigenschaften, die auch bei hohen Temperaturen unverändert bleiben, zur Verfügung zu stellen, die auf einfache Weise durch Heißpressen in einem breiten Temperaturbereich hergestellt werden können.

Die erfindungsgemäßen Formkörper aus polykristallinem Siliciumcarbid mit einer Dichte von mindestens 99 % der theoretischen Dichte des SiC bestehen aus :

mindestens 97,8 Gew.% β-Siliciumcarbid
0,1 bis 0,8 Gew.% Aluminium
bis zu 0,8 Gew.% Stickstoff und/oder Phosphor
bis zu 0,3 Gew.% Sauerstoff
bis zu 0,3 Gew.% zusätzlichem Kohlenstoff

wobei das β-Siliciumcarbid in Form eines einphasigen Mikrogefüges und die restlichen Bestandteile im wesentlichen in Form einer festen Lösung im β-SiC-Gitter vorliegen. Sie haben eine Biegebruchfestigkeit von mindestens 600 $N/mm^2$ bis zu mindestens 1 450 °C, gemessen nach der 4-Punktmethode bei einer Belastungsgeschwindigkeit von mindestens $3\ N \cdot mm^{-2} \cdot sec^{-1}$ und einen überwiegend transkristallinen Bruchmodus.

In den erfindungsgemäßen Formkörpern aus polykristallinem SiC liegen Aluminium sowie gegebenenfalls vorhandener Stickstoff und/oder Phosphor, Restsauerstoff und Restkohlenstoff definitionsgemäß im wesentlichen in Form einer festen Lösung im β-SiC-Gitter vor, worunter zu verstehen ist, daß sie bis zu einer 2 400-fachen Vergrößerung nicht als getrennte Phase nachweisbar sind.

Vorzugsweise haben die Formkörper einen Restsauerstoffgehalt und einen Restkohlenstoffgehalt von jeweils weniger als 0,2 Gew.%, die ausschließlich aus dem für die Herstellung verwendeten β-SiC-Pulver stammen. Die Mitverwendung von zusätzlichem Kohlenstoff bei der Herstellung der erfindungsgemäßen Formkörper ist nicht nur nicht erforderlich, sondern unerwünscht, da hierdurch bereits die Oxydationsbeständigkeit der Sinterkörper nachteilig beeinflußt werden kann.

Der Bruchmodus der Formkörper ist bis zu Temperaturen von 1 450 °C und höher transkristallin. Damit ist sichergestellt, daß die Korngrenzen für das Festigkeitsverhalten keine Schwachstellen darstellen, das heißt, unter Belastung bei erhöhter Temperatur werden Korngrenzengleitvorgänge unterdrückt, und die hierdurch begünstigte unterkritische Rißausbreitung ist vernachlässigbar gering.

Die erfindungsgemäßen Formkörper aus polykristallinem Siliciumcarbid weisen daher eine hohe Festigkeit bei cyclischer Belastung und unter Langzeitbedingungen auf ; außerdem zeigen sie eine hohe Kriechfestigkeit.

Die erfindungsgemäßen Formkörper aus polykristallinem Siliciumcarbid werden vorteilhaft aus pulverförmigem Siliciumcarbid durch Heißpressen hergestellt. Dieses Verfahren ist dadurch gekennzeichnet, daß im wesentlichen in der β-Modifikation vorliegendes SiC in Pulverform mit einer Teilchengrößenverteilung von 8 µm und feiner mit einem Aluminium enthaltenden Zusatz in einer 0,1 bis 0,8 Gew.% freiem Aluminium entsprechenden Menge, bezogen auf das Gesamtgewicht der Feststoffanteile, homogen vermischt und anschließend in Gegenwart einer gegenüber Siliciumcarbid inerten Atmosphäre oder im Vakuum unter Anwendung eines Stempeldrucks von mindestens 100 bar (10 MPa) bei einer Temperatur von 1 750 °C bis 2 200 °C, vorzugsweise von 1 800 °C bis 1 950 °C, bis zur Bildung der polykristallinen Formkörper heißgepreßt werden.

Für die Durchführung des erfindungsgemäßen Verfahrens wird als Ausgangsmaterial vorteilhaft ein handelsübliches β-Siliciumcarbid-Mikronpulver (Teilchengrößenverteilung feiner 3 µm) verwendet. Als Maß für die Teilchenfeinheit des Pulvers wird zweckmäßig die spezifische Oberfläche herangezogen (gemessen nach der BET-Methode), da die Teilchengröße selbst erfahrungsgemäß im Mikronbereich nicht mehr mit hinreichender Genauigkeit bestimmt werden kann. Aus der Angabe der spezifischen Oberlfäche kann die mittlere Teilchengröße gemäß der Gleichung

$$\overline{D} = 6/S \cdot \rho$$

$\overline{D}$ = mittlere Teilchengröße in um
S = spezifische Oberfläche in $m^2/g$
ρ = Pulverdichte in $g/cm^3$

annäherungsweise berechnet werden.

Vorwiegend in der β-Modifikation vorliegende SiC-Pulver mit einer spezifischen Oberfläche, vorzugsweise im Bereich von 4 bis 20 $m^2/g$, haben sich hierbei besonders bewährt. Mit ausschließlich in der β-Modifikation vorliegenden SiC-Mikronpulvern werden die besten Ergebnisse erzielt, wobei eine Vorbehandlung mit Fluß- und/oder Salpetersäure zweckmäßig ist, um Fremdstoffe, insbesondere anhaftende Kieselsäure und andere Sauerstoff enthaltende Verbindungen, zu entfernen, die zu einer unerwünschten Erhöhung des Restsauerstoffgehaltes im fertigen Sinterkörper führen können. Das SiC-Pulver sollte eine Reinheit von mindestens 98 %, vorzugsweise 99 %, aufweisen.

Der Aluminium enthaltende Zusatz wird vorteilhaft in Pulverform mit einer Teilchengrößenverteilung von 10 µm und feiner (Mikronpulver) eingesetzt, und zwar entweder als Aluminiummetall oder als Aluminiumverbindung. Es kann jedoch auch ein mit Aluminium dotiertes Siliciumcarbidpulver verwendet werden. Als Aluminiumverbindungen haben sich aluminiumcarbid, Aluminiumnitrid und insbesondere Aluminiumphosphid bewährt. Die Verwendung oxidischer Aluminiumverbindungen, wie Aluminiumoxid ist indessen nicht vorteilhaft, da diese zu unerwünscht hohen Restsauerstoffgehalten im fertigen Sinterkörper führen können.

Der Aluminium enthaltende Zusatz wird definitionsgemäß in einer 0,1 bis 0,8 Gew.% freiem Aluminium entsprechenden Menge, bezogen auf das Gesamtgewicht der Feststoffanteile, verwendet. Geringere Mengen als 0,1 Gew.% Aluminium sind praktisch nicht mehr im gewünschten Sinne wirksam, das heißt, hiermit konnte unter den gegebenen Bedingungen keine ausreichende Verdichtung des Siliciumcarbids mehr erzielt werden. Größere Mengen als 0,8 Gew.% Aluminium bringen keinen Vorteil. So konnte nachgewiesen Werden, daß bei einer Steigerung des Aluminiumgehalts auf 1,5 Gew.% die erhaltenen Formkörper sowohl bei Raumtemperatur als auch bis zu 1 450 °C einen interkristallinen Bruch mit einem deutlichen Festigkeitsabfall bei 1 450 °C zeigten, das heißt, unter mechanischer Belastung trat in diesem Temperaturbereich bereits eine hohe unterkritische Rißausbreitung auf.

Außerdem wurde festgestellt, daß bei Einsatz von β-SiC-Pulver mit Aluminiumzusätzen bis zu 0,8 Gew.% Forkörper erhalten werden, die sowohl bei Raumtemmperatur, als auch bei 1 450 °C einen transkristallinen Bruchmodus zeigen und somit den Anforderungen hinsichtlich der Festigkeit genügen.

Im Vergleich dazu führt bei Einsatz von α-SiC-Pulver bereits ein Aluminiumgehalt von 0,45 Gew.% zu Formkörpern, die zwar bei Raumtemperatur noch einen transkristallinen Bruchmodus zeigen, aber bei Temperaturen oberhalb von 1 400 °C interkristallin brechen, was mit einem nachweisbaren Festigkeitsabfall in diesem Temperaturbereich verbunden ist. Dieses unterschiedliche Verhalten ist vermutlich auf die bessere Löslichkeit des Aluminiums im β-SiC-Gitter zurückzuführen, so daß Aluminiumzusätze in Mengen bis zu 0,8 Gew.% nicht für die Bildung von glasartigen Alumosilicatschichten an den Korngrenzen zur Verfügung stehen. Um sicherzustellen, daß die Lösung von Aluminium im β-SiC-Gitter nicht durch die bei höheren Temperaturen beginnende Phasentransformation von β-SiC in die thermisch stabilere α-Modifikation begrenzt wird, ist es daher vorteilhaft, bei Aluminiumzusätzen im Bereich von 0,4 bis 0,8 Gew.% Temperaturen von 1 950 °C beim Heißpreßvorgang nicht zu überschreiten.

Der Einsatz von stickstoff- und phosphorfreien Aluminium enthaltenden Zusätzen führt zu Sinterkörpern, die bei Raumtemperatur eine sehr niedrige elektrische Leitfähigkeit aufweisen und praktisch nur mit Aluminium dotiertes β-Siliciumcarbid enthalten. Bei Einsatz von Stickstoff oder Phosphor dotiertem Siliciumcarbidpulver können hingegen Sinterkörper mit hoher elektrischer leitfähigkeit bei Raumtemperatur erhalten werden, wobei Aluminium und Stickstoff bzw. Phosphor im wesentlichen in Form einer festen Lösung im Siliciumcarbidgitter vorliegen, was beispielsweise für eine nachträgliche elektroerosive Bearbeitung der Sinterkörper von Vorteil ist.

Die Durchführung des erfindungsgemäßen Verfahrens kann wie folgt erläutert werden :

Zunächst wird das SiC-Pulver mit dem Aluminium enthaltenden Zusatz homogen vermischt, was vorteilhaft dadurch erreicht wird, daß das Siliciumcarbidpulver gemeinsam mit dem pulverförmigen Aluminium enthaltenden Zusatz in einem organischen Lösungsmittel dispergiert wird. Als organische Lösungsmittel können beispielsweise Aceton und niedere aliphatische Alkohole mit 1 bis 6 C-Atomen Verwendung finden. Das Dispergieren kann durch mechanische Bewegung einer dünnflüssigen Suspension in Plastikbehältern unter Verwendung eines Rührers oder durch Kneten einer dickflüssigen Suspension in einer Knetvorrichtung vorgenommen werden, wobei Mahlzeiten bis zu etwa 4 Stunden ausreichend sind. Durch Verlängerung der Mahlzeit für die Ausgangspulvermischung konnte keine weitere Festigkeitssteigerung des fertig gespreßten Sinterkörpers nachgewiesen werden. Nach dem Entfernen des Lösungsmittels, was beispielsweise bei einer dünnflüssigen Suspension durch Sprüh- oder Gefriertrocknung oder bei einer dicklüssigen Suspension durch Abdunsten während des Knetvorganges erfolgen kann, wird das erhaltene homogene Pulver unter gleichzeitiger Formgebung heißgepresst.

Die Drucksinterung in dem angegebenen Temperaturbereich wird vorzugsweise in einer widerstands- oder induktionsbeheizten Graphitpreßvorrichtung durchgeführt. Der angewendete Stempeldruck kann im Bereich von 100 bar (10 MPa) bis etwa 800 bar (80 MPa) liegen. Das für die Drucksinterung erforderliche Temperaturprogramm (Aufheizen — Verweilen — Abkühlen) kann in Abhängigkeit von dem gewählten Stempeldruck und der Temperatur variiert werden, wobei im allgemeinen Aufheizzeiten von etwa 20-30 Minuten und Verweilzeiten bei der gewählten Maximaltemperatur (Solltemperatur) von etwa 10-30 Minuten ausreichend sind. Die zu verdichtende Pulvermischung kann in der Heißpreßvorrichtung von einer inerten Atmosphäre oder Vakuum umgeben sein. In Gegenwart einer inerten Atmosphäre, worunter eine gegenüber SiC inerte Schutzgasatmosphäre zu verstehen ist, ist der umgebende Gasdruck üblicherweise der Normaldruck (1,01 bar = 0,101 MPa). Als Schutzgasatmosphäre können Edelgase, wie Argon oder Helium oder eine reduzierende Atmosphäre, was bevorzugt ist, wie CO oder $H_2$ Verwendung finden. Die Drucksinterung kann jedoch auch im Vakuum bei einem Gasruck von $<$ 50 mbar ($<$ 5 000 Pa) durchgeführt werden, wobei sich ein Gasdruck von $\leq$ 30 mbar ($\leq$ 3 000 Pa) besonders bewährt hat.

Das erfindungsgemäße Verfahren wird anhand der folgenden Beispiele näher erläutert :

## Beispiel 1

Als Ausgangsmaterial wurde ein β-SiC-Pulver mit einer spezifischen Oberfläche von 11,4 $m^2/g$, einem Reinheitsgrad von 99,3 Gew.%, einem Restsauerstoffgehalt von 0,25 Gew.% und einem Restkohlenstoffgehalt von 0,2 Gew.% sowie ein Aluminiummetallpulver mit einer spezifischen Oberfläche von 4,8 $m^2/g$ verwendet.

333,5 g des β-SiC-Pulvers wurden zusammen mit 2,35 g des Aluminiumpulvers (entsprechend einem Aluminiumzusatz von 0,7 Gew.% freiem Aluminium, bezogen auf das Gesamtgewicht der Feststoffanteile) und 220 g Aceton in einer Knetvorrichtung 4 Stunden vermischt. Das nach Beendigung des Knetens erhaltene Pulver wurde anschließend in einem Vakuumtrockenofen 12 Stunden bei 50 °C getrocknet. Dann wurde die Pulvermischung in einer Graphitform unter Vakuum bei einem Gasdruck von 30 mbar (3 000 Pa) unter Anwendung eines Stempeldrucks von 400 bar (40 MPa) bei 1 900 °C heißgepreßt. Die Aufheizzeit betrug 25 Minuten und die Verweilzeit bei der Solltemperatur 20 Minuten. Nach dem Abschalten des Ofens wurde der Sinterkörper in der Form auf Raumtemperatur abgekühlt. Nach der Entformung wurde ein zylindrischer Körper mit einem Durchmesser von 72 mm und einer Höhe von 25 mm erhalten, mit einer Dichte von 3,202 $g/cm^3$, entsprechend 99,75 %TD.

Hieraus wurden mittels Diamantwerkzeugen Probekörper mit den Endmessungen 3,15 × 4,1 × 35 mm geschnitten und die Biegebruchfestigkeit bei verschiedenen Prüftemperaturen bestimmt. Die Biegebruchfestigkeit wurde nach der 4-Punktemethode mit einer Auflagenweite von 30 mm und einer Stützweite von 15 mm bei einer Belastungsgeschwindigkeit von 3 N/mm$^2$ · sec gemessen. Die Ergebnisse (Mittelwerte aus jeweils 8 Einzelmessungen) sind in der folgenden Tabelle zusammengestellt.

Tabelle 1

| Temperatur (°C) | Biegebruchfestigkeit (N/mm$^2$) |
|---|---|
| 20 | 651 |
| 700 | 645 |
| 1 000 | 662 |
| 1 200 | 656 |
| 1 370 | 665 |
| 1 450 | 670 |

Die mit verdünnter Flußsäure behandelten Bruchflächen der proben wurden keramographisch im Rasterlektronenmikroskop untersucht. Sie zeigten alle einen überwiegend transkristallinen Bruch. Die polierten Anschliffe der Proben wurden zum Sichtbarmachen der Korngrenzen mit einer siedenden alkalischen Ferricyanidlösung geätzt. Sie zeigten ein äquiaxiales Gefüge mit einer durchschnittlichen Korngröße von 7 µm und einer maximalen von 9 µm.

Beispiel 2

Aus 86,5 g eines β-SiC-Pulvers mit einer spezeifischen Oberfläche von 9,7 m$^2$/g, einem Reinheitsgrad von 99,5 Gew.%, einem Restsauerstoffgehalt von 0,11 Gew.% und einem Restkohlenstoffgehalt von 0,05 Gew.%, sowie 0,26 g des in Beispiel 1 verwendeten Aluminiummetallpulvers (entsprechend einem Aluminiumzusatz von 0,3 Gew.% freiem Aluminium, bezogen auf das Gesamtgewicht der Feststoffanteile) wurde, unter den gleichen Bedingungen wie in Beispiel 1 beschrieben, eine Pulvermischung hergestellt und bei 1 950 °C heißgepreßt. Die Aufheizzeit betrug 30 Minuten und die Verweilzeit bei der Solltemperatur 15 Minuten. Der Sinterkörper (Durchmesser 72 mm, Höhe 6 mm) hatte eine Dichte von 3,20 g/cm$^3$, entsprechend 99,7 %TD.

In Tabelle 2 sind die Biegebruchfestigkeiten (auf die gleiche Weise wie in Beispiel 1 ermittelt) bei einer Belastungsgeschwindigkeit von 3 N/mm$^2$ · sec in Abhängigkeit von der Prüftemperatur zusammengestellt (Mittelwerte aus jeweils 6 Einzelmessungen).

Tabelle 2

| Temperatur (°C) | Biegebruchfestigkeit (N/mm$^2$) |
|---|---|
| 20 | 634 |
| 1 450 | 639 |

Die keramographische Untersuchung der Probekörper zeigte ein Gefüge mit stäbchenförmig ausgebildeten Körnern mit Längen bis 15 µm. Das Bruchverhalten war sowohl bei 20 °C als auch bei 1 450 °C transkristallin.

Beispiel 3

Aus 84,5 g des β-SiC-Pulvers aus Beispiel 2 und 1,1 g Aluminiumphosphid (entsprechend einem Aluminiumzusatz von 0,6 Gew.% freiem Aluminium, bezogen auf das Gesamtgewicht der Feststoffanteile) wurde unter den gleichen Bedingungen wie in Beispiel 2 eine Pulvermischung hergestellt und heißgepreßt.

Der erhaltene Sinterkörper hatte eine Dichte von 3,195 g/cm$^3$, entsprechend 99,5 %TD. In Tabelle 3 sind die Biegebruchfestigkeiten (auf die gleiche Weise wie in Beispiel 1 ermittelt) bei einer Belastungsgeschwindigkeit von 3 N/mm$^2$ · sec in Abhängigkeit von der Prüftemperatur zusammengestellt (Mittelwerte aus jeweils 6 Einzelmessungen).

Tabelle 3

| Temperatur (°C) | Biegebruchfestigkeit (N/mm$^2$) |
|---|---|
| 20 | 664 |
| 1 450 | 678 |

Durch keramographische Untersuchung wurde ein äquiaxiales Gefüge mit einer durchschnittlichen

Korngröße von 5 μm und einer maximalen von etwa 8 μm festgestellt. Das Bruchverhalten war sowohl bei 20 °C als auch bei 1 450 °C transkristallin.

Die folgenden Beispiele 4 bis 6 dienen zum Vergleich. Im Beispiel 4 wird gezeigt, daß ein höherer Aluminiumzusatz das Festigkeitsverhalten der Sinterkörper bei höheren Temperaturen verschlechtert.

Beispiel 4 (zum Vergleich)

Aus 84 g des β-SiC-Pulvers aus Beispiel 2 und 1,28 g des Aluminiumpulvers aus Beispiel 1 (entsprechend einem Aluminiumzusatz von 1,5 Gew.% freiem Aluminium, bezogen auf das Gesamtgewicht der Feststoffanteile) wurde, unter den gleichen Bedingungen wie in Beispiel 1 beschrieben, eine Pulvermischung hergestellt. Das Heißpressen erfolgte ebenfalls unter gleichen Bedingungen, mit der Abänderung, daß die Aufheizzeit 30 Minuten und die Verweilzeit bei der Solltemperatur von 1 900 °C 15 Minuten betrug.

Der erhaltene Sinterkörper hatte eine Dichte von 3,21 g/cm$^3$, entsprechend 100 %TD.

In Tabelle 4 sind die Biegebruchfestigkeiten (auf die gleiche Weise wie in Beispiel 1 ermittelt) bei einer Belastungsgeschwindigkeit von 3 N/mm$^2$ · sec in Abhängigkeit von der Prüftemperatur zusammengestellt (Mittelwerte aus jeweils 6 Einzelmessungen).

Tabelle 4

| Temperatur (°C) | Biegebruchfestigkeit (N/mm$^2$) |
|---|---|
| 20 | 753 |
| 1 450 | 423 |

Hieraus geht eindeutig hervor, daß bei 1 450 °C ein außergewöhnlich starker Abfall der Biegebruchfestigkeit erfolgt. Die Bruchflächen der Proben zeigen sowohl bei Raumtemperatur als auch bei 1 450 °C einen interkristallinen Bruch.

Im Beispiel 5 wird gezeigt, daß bei Einsatz von α-SiC-Pulver bereits bei einem Al-Zusatz von 0,45 Gew.% schlechtere Eigenschaften erzielt werden.

Beispiel 5 (zum Vergleich)

Aus 85 g eines α-SiC-Pulvers mit einer spezifischen Oberfläche von 7,6 m$^2$/g und einem Reinheitsgrad von 99,1 Gew.% und 0,385 g des Aluminiumpulvers aus Beispiel 1 (entsprechend einem Aluminiumzusatz von 0,45 Gew.% freiem Aluminium, bezogen auf das Gesamtgewicht der Feststoffanteile) wurde unter den gleichen Bedingungen wie in Beispiel 1 eine Pulvermischung hergestellt. Das Heißpressen erfolgte ebenfalls unter gleichen Bedingungen, mit der Abänderung, daß die Aufheizzeit 25 Minuten und die Verweilzeit bei der Solltemperatur von 2 150 °C, 60 Minuten betrug.

Der erhaltene Sinterkörper hatte eine Dichte von 3,205 g/cm$^3$, entsprechend 99,8 %TD.

In Tabelle 5 sind die Biegebruchfestigkeiten (auf die gleiche Weise wie in Beispiel 1 ermittelt) bei einer Belastungsgeschwindigkeit von 3 N/mm$^2$ · sec in Abhängigkeit von der Prüftemperatur zusammengestellt (Mittelwerte aus jeweils 6 Einzelmessungen).

Tabelle 5

| Temperatur (°C) | Biegebruchfestigkeit (N/mm$^2$) |
|---|---|
| 20 | 663 |
| 1 450 | 593 |

Wie hieraus ersichtlich, ist bei 1 450 °C bereits ein deutlich erkennbarer Abfall der Biegebruchfestigkeit festzustellen. Die Bruchfläche zeigte bei den bei Raumtemperatur gebrochenen Proben einen fast vollständig transkristallinen Bruch, jedoch bei 1 450 °C einen weitgehend interkristallinen Bruch.

Im Beispiel 6 wird gezeigt, daß bei Einsatz eines β-SiC-Pulvers mit höherem Restsauerstoff- und Restkohlenstoffgehalt ebenfalls schlechtere Eigenschaften der Formkörper erzielt werden.

Beispiel 6 (zum Vergleich)

Aus 85 g eines β-SiC-Pulvers mit einer spezifischen Oberfläche von 12,1 m$^2$/g, einem Reinheitsgrad von 98,0 Gew.%, einem Restsauerstoffgehalt von 0,9 Gew.% und einem Restkohlenstoffgehalt von 0,8 Gew.% und 0,6 g des Aluminiumpulvers aus Beispiel 1 (entsprechend einem Aluminiumzusatz von 0,7 Gew.% freiem Aluminium, bezogen auf das Gesamtgewicht der Feststoffanteile) wurde unter den gleichen Bedingungen wie in Beispiel 2 beschrieben, eine Pulvermischung hergestellt und heißgepreßt.

Der erhaltene Sinterkörper hatte eine Dichte von 3,197 g/m$^3$, entsprechend 99,6 %TD.

In Tabelle 6 sind die Biegebruchfestigkeiten (auf die gleiche Weise, wie in Beispiel 1 ermittelt) bei einer Belastungsgeschwindigkeit von 3 N/mm$^2$ · sec in Abhängigkeit von der Prüftemperatur zusammengestellt (Mittelwerte aus jeweils 6 Einzelmessungen).

Tabelle 6

| Temperatur (°C) | Biegebruchfestigkeit (N/mm$^2$) |
|---|---|
| 20 | 474 |
| 1 450 | 483 |

Wie hieraus ersichtlich, liegen die Werte sowohl bei 20 °C als auch bei 1 450 °C deutlich niedriger als 600 N/mm$^2$, obwohl die Proben bei beiden Prüftemperaturen transkristallin brechen.

**Ansprüche** (für die Vertragsstaaten : BE, CH, DE, FR, GB, IT, LI, NL, SE)

1. Formkörper aus polykristallinem Siliciumcarbid mit einer Dichte von mindestens 99 % der theoretischen Dichte des SiC, bestehend aus

mindestens 97,8 Gew.% β-Siliciumcarbid
0,1 bis 0,8 Gew.% Aluminium
bis zu 0,8 Gew.% Stickstoff und/oder Phosphor
bis zu 0,3 Gew.% Sauerstoff
bis zu 0,3 Gew.% zusätzlichem Kohlenstoff,

wobei das β-Siliciumcarbid in Form eines einphasigen Mikrogefüges und die restlichen Bestandteile im wesentlichen in Form einer festen Lösung im β-SiC-Gitter vorliegen, mit einer Biegebruchfestigkeit von mindestens 600 N/mm$^2$ bis zu mindestens 1 450 °C, gemessen nach der 4-Punktmethode bei einer Belastungsgeschwindigkeit von mindestens 3 N × mm$^{-2}$ × sec$^{-1}$ und einem überwiegend transkristallinen Bruchmodus.

2. Verfahren zur Herstellung der Formkörper gemäß Anspruch 1 aus β-Siliciumcarbid und Aluminium als Sinterhilfsmittel durch Heißpressen unter gleichzeitiger Formgebung, wobei im wesentlichen in der β-Modifikation vorliegendes Siliciumcarbid in Pulverform mit einer Teilchengrößenverteilung von 8 μm und feiner, mit einem Aluminium enthaltenden Zusatz in einer 0,1 bis 0,8 Gew.% freiem Aluminium entsprechenden Menge, bezogen auf das Gesamtgewicht der Feststoffanteile, homogen vermischt und anschließend in Gegenwart einer gegenüber Siliciumcarbid inerten Atmosphäre oder im Vakuum unter Anwendung eines Stempeldruckes von mindestens 100 bar (10 MPa) bei einer Temperatur von 1 750 °C bis 2 200 °C bis zur Bildung der Formkörper aus polykristallinem Siliciumcarbid heißgepreßt werden.

3. Verfahren nach Anspruch 2, dadurch gekennzeichnet, daß ein ausschließlich in der β-Modifikation vorliegendes Siliciumcarbidpulver verwendet wird.

4. Verfahren nach Anspruch 2 und 3, dadurch gekennzeichnet, daß ein Siliciumcarbidpulver mit einer spezifischen Oberfläche von 4 bis 20 m$^2$/g, verwendet wird.

5. Verfahren nach Anspruch 2, dadurch gekennzeichnet, daß der Aluminium enthaltende Zusatz in Pulverform mit einer Teilchengrößenverteilung von 10 μm und feiner eingesetzt wird.

6. Verfahren nach Anspruch 5, dadurch gekennzeichnet, daß der Aluminium enthaltende Zusatz als Aluminiummetall oder als Aluminiumverbindung eingesetzt wird.

7. Verfahren nach Anspruch 6, dadurch gekennzeichnet, daß als Aluminiumverbindung Aluminiumnitrid und/oder Aluminiumphosphid verwendet wird.

8. Verfahren nach Anspruch 2, dadurch gekennzeichnet, daß die Drucksinterung im Vakuum bei einem Gasdruck von < 50 mbar (5 000 Pa) durchgeführt wird.

9. Verfahren nach Anspruch 2, dadurch gekennzeichnet, daß die Drucksinterung in einer Schutzgasatmosphäre durchgeführt wird.

**Ansprüche** (für den Vertragsstaat AT)

1. Verfahren zur Herstellung von Formkörpern aus polykristallinem Siliciumcarbid aus β-Siliciumcarbid und Aluminium als Sinterhilfsmittel durch Heißpressen unter gleichzeitiger Formgebung, wobei im wesentlichen in der β-Modifikation vorliegendes Siliciumcarbid in Pulverform mit einer Teilchengrößenverteilung von 8 μm und feiner, mit einem Aluminium enthaltenden Zusatz in einer 0,1 bis 0,8 Gew.-% freiem Aluminium entsprechenden Menge, bezogen auf das Gesamtgewicht der Feststoffanteile, homogen vermischt und anschließend in Gegenwart einer gegenüber Siliciumcarbid inerten Atmosphäre oder im Vakuum unter Anwendung eines Stempeldruckes von mindestens 100 bar (10 MPa) bei einer Temperatur von 1 750 °C bis 2 200 °C heißgepreßt werden bis zur Bildung der Formkörper aus polykristallinem Siliciumcarbid mit einer Dichte von mindestens 99 % der theoretischen Dichte des SiC, bestehend aus

mindestens 97,8 Gew.% β-Siliciumcarbid
0,1 bis 0,8 Gew.% Aluminium
bis zu 0,8 Gew.% Stickstoff und/oder Phosphor
bis zu 0,3 Gew.% Sauerstoff
bis zu 0,3 Gew.% zusätzlichem Kohlenstoff,

wobei das β-Siliciumcarbid in Form eines einphasigen Mikrogefüges und die restlichen Bestandteile im wesentlichen in Form einer festen Lösung im β-SiC-Gitter vorliegen, mit einer Biegebruchfestigkeit von mindestens 600 $N/mm^2$ bis zu mindestens 1 450 °C, gemessen nach der 4-Punktmethode bei einer Belastungsgeschwindigkeit von mindestens $3 N \times mm^{-2} \times sec^{-1}$ und einem überwiegend transkristallinen Bruchmodus.

2. Verfahren nach Anspruch 1, dadurch gekennzeichnet, daß ein ausschließlich in der β-Modifikation vorliegendes Siliciumcarbidpulver verwendet wird.

3. Verfahren nach Anspruch 1 und 2, dadurch gekennzeichnet, daß ein Siliciumcarbidpulver mit einer spezifischen Oberfläche von 4 bis 20 $m^2/g$ verwendet wird.

4. Verfahren nach Anspruch 1, dadurch gekennzeichnet, daß der Aluminium enthaltende Zusatz in Pulverform mit einer Teilchengrößenverteilung von 10 μm und feiner eingesetzt wird.

5. Verfahren nach Anspruch 4, dadurch gekennzeichnet, daß der Aluminium enthaltende Zusatz als Aluminiummetall oder als Aluminiumverbindung eingesetzt wird.

6. Verfahren nach Anspruch 5, dadurch gekennzeichnet, daß als Aluminiumverbindung Aluminiumnitrid und/oder Aluminiumphosphid verwendet wird.

7. Verfahren nach Anspruch 1, dadurch gekennzeichnet, daß die Drucksinterung im Vakuum bei einem Gasdruck von < 50 mbar (5 000 Pa) durchgeführt wird.

8. Verfahren nach Anspruch 1, dadurch gekennzeichnet, daß die Drucksinterung in einer Schutzgasatmosphäre durchgeführt wird.

**Claims** (for the contracting States : BE, CH, DE, FR, GB, IT, LI, NL, SE)

1. Shaped articles of polycrystalline silicon carbide having a density of at least 99 % of the theoretical density of siC, consisting of

at least 97.8 % by weight of β-silicon carbide,
0.1 to 0.8 % by weight of aluminium,
up to 0.8 % by weight of nitrogen and/or phosphorus,
up to 0.3 % by weight of oxygen,
up to 0.3 % by weight of additional carbon,

the β-silicon carbide having the form of a single-phase microstructure, and the other components substantially being in the form of a solid solution in the β-SiC lattice, and having a flexural strength of at least 600 $N/mm^2$ up to at least 1,450 °C, measured according to the four-point method at a stress rate of at least $3 N \times mm^{-2} \times sec^{-1}$, and a predominantly transgranular fracture mechanism.

2. Process for the manufacture of shaped articles according to claim 1 from β-silicon carbide and aluminium as sintering aids by hot-pressing and simultaneously shaping, wherein pulverulent silicon carbide substantially having the form of the β-modification and having a particle size distribution of 8 μm and finer is homogeneously mixed with an aluminium-containing additive in an amount corresponding to from 0.1 to 0.8 % by weight of free aluminium, based on the total weight of the solids constituents, and the mixture is subsequently hot-pressed in the presence of an atmosphere which is inert as against silicon carbide or in a vacuum, while applying a die pressure of at least 100 bar (10 MPa) at temperature of from 1,750 to 2,200 °C until the shaped articles of polycrystalline silicon carbide have been formed.

3. Process according to claim 2, characterized in that a silicon carbide powder is used which exclusively has the form of the β-modification.

4. Process according to claims 2 and 3, characterized in that a silicon carbide powder is used which has a specific surface area of from 4 to 20 $m^2/g$.

5. Process according to claim 2, characterized in that said aluminium-containing additive is used in the form of a powder having a particle size distribution of 10 μm and finer.

6. Process according to claim 5, characterized in that an aluminium metal or an aluminium compound is used as the aluminium-containing additive.

7. Process according to claim 6, characterized in that aluminium nitride and/or aluminium phosphide is used as said aluminium compound.

8. Process according to claim 2, characterized in that the pressure sintering is carried out in a vacuum at a gas pressure of less than 50 mbar (5,000 Pa).

9. Process according to claim 2, characterized in that said pressure sintering is carried out in a protective gas atmosphere.

**Claims** (for the contracting State AT)

1. Process for the manufacture of shaped articles of polycrystalline silicon carbide consisting of β-silicon carbide and aluminium as sintering aids, by hot-pressing and simultaneously shaping, wherein pulverulent silicon carbide substantially having the form of the β-modification and having a particle size distribution of 8 μm and finer is homogeneously mixed with an aluminium-containing additive in an amount corresponding to from 0.1 to 0.8 % by weight of free aluminium, based on the total weight of the solids constituents, and the mixture is subsequently hot-pressed in the presence of an atmosphere which is inert as against silicon carbide or in a vacuum, while applying a die pressure of at least 100 bar (10 MPa) at a temperature of from 1,750 to 2,200 °C until the shaped articles of polycrystalline silicon carbide having a density of at least 99 % of the theoretical density of SiC have been formed, said articles consisting of

at least 97.8 % by weight of β-silicon carbide,
0.1 to 0.8 % by weight of aluminium,
up to 0.8 % by weight of nitrogen and/or phosphorus,
up to 0.3 % by weight of oxygen,
up to 0.3 % by weight of additional carbon,

the β-silicon carbide having the form of a single-phase micro-structure and the other components substantially being in the form of a solid solution in the β-SiC lattice, and having a flexural strength of at least 600 $N/mm^2$ up to at least 1,450 °C, measured according to the four-point method at a stress rate of at least $3 N \times mm^{-2} \times sec^{-1}$, and a predominantly transgranular fracture mechanism.

2. Process according to claim 1, characterized in that a silicon carbide powder is used which exclusively has the form of the β-modification.

3. Process according to claims 1 and 2, characterized in that a silicon carbide powder is used which has a specific surface area of from 4 to 20 $m^2/g$.

4. Process according to claim 1, characterized in that said aluminium-containing additive is used in the form of a powder having a particle size distribution of 10 μm and finer.

5. Process according to claim 4, characterized in that an aluminium metal or an aluminium compound is used as the aluminium-containing additive.

6. Process according to claim 5, characterized in that aluminium nitride and/or aluminium phosphide is used as said aluminium compound.

7. Process according to claim 1, characterized in that the pressure sintering is carried out in a vacuum at a gas pressure of less than 50 mbar (5,000 Pa).

8. Process according to claim 1, characterized in that said pressure sintering is carried out in a protective gas atmosphere.

**Revendications** (pour les Etats contractants : BE, CH, DE, FR, GB, IT, LI, NL, SE)

1. Pièces moulées en du carbure de silicium polycristallin, présentant une masse volumique représentant au moins 99 % de la densité théorique du SiC, consistant en :

au moins 97,8 % en poids de carbure de silicium-bêta,
0,1 à 0,8 % en poids d'aluminium,
jusqu'à 0,8 % en poids d'azote et/ou de phosphore,
jusqu'à 0,3 % en poids d'oxygène,
jusqu'à 0,3 % en poids de carbone supplémentaire,

dans laquelle le carbure de silicium bêta se trouve sous forme d'une microstructure en une seule phase et les autres constituants se trouvent essentiellement sous forme d'une solution solide dans le réseau de SiC-bêta, cette pièce présentant une résistance à la rupture par flexion d'au moins 600 $N/mm^2$ jusqu'à 1 450 °C au moins, mesurée d'après la méthode des quatre points pour une vitesse de charge d'au moins $3 N \times mm^{-2} \times sec^{-1}$, et un mode de rupture qui est surtout transcristalline.

2. Procédé de production des pièces moulées selon la revendication 1, à partir de carbure de silicium bêta et d'aluminium comme adjuvant de frittage, par compression à chaud avec formage ou moulage simultané, procédé caractérisé en ce qu'on mélange de façon homogène du carbure de silicium présent sous forme de poudre essentiellement de variété bêta, présentant une granulométrie de 8 µm et moins, avec un additif contenant de l'aluminium et présent en une quantité correspondant à 0,1 à 0,8 % en poids d'aluminium libre, par rapport au poids total de la matière sèche, et l'on comprime ensuite à chaud en présence d'une atmosphère inerte à l'égard du carbure de silicium ou sous dépression en présence d'une pression d'au moins 100 bars (10 MPa) à une température de 1 750 °C à 2 200 °C jusqu'à formation de la pièce moulée en du carbure de silicium polycristallin.

3. Procédé selon la revendication 2, caractérisé en ce qu'on utilise une poudre de carbure de silicium présente exclusivement sous la forme de la variété bêta.

4. Procédé selon l'une des revendications 2 et 3, caractérisé en ce qu'on utilise une poudre de carbure de silicium présentant une surface spécifique de contact de 4 à 20 $m^2/g$.

5. Procédé selon la revendication 2, caractérisé en ce qu'on utilise l'additif contenant de l'aluminium sous forme de poudre présentant une granulométrie de 10 µm et moins.

6. Procédé selon la revendication 5, caractérisé en ce qu'on utilise l'additif contenant de l'aluminium sous forme d'aluminium métallique ou d'un composé d'aluminium.

7. Procédé selon la revendication 6, caractérisé en ce qu'on utilise comme composé de l'aluminium du nitrure d'aluminium et/ou du phosphure d'aluminium.

8. Procédé selon la revendication 2, caractérisé en ce qu'on effectue le frittage sous pression en opérant sous dépression à une pression de gaz inférieure à 50 mbars (5 000 Pa).

9. Procédé selon la revendication 2, caractérisé en ce qu'on effectue le frittage sous pression en opérant dans une atmosphère de gaz protecteur.

**Revendications** (pour l'Etat contractant AT)

1. Procédé de production de pièces moulées en du carbure de silicium polycristallin, à partir de carbure de silicium bêta et d'aluminium comme adjuvant de frittage, par compression à chaud avec façonnage ou moulage simultané, caractérisé en ce qu'on mélange de façon homogène du carbure de silicium pulvérulent, présent essentiellement sous forme de la variété bêta, présentant une granulométrie de 8 µm et moins, avec un additif contenant de l'aluminium et présent en une quantité correspondant à 0,1 à 0,8 % en poids d'aluminium libre, par rapport au poids total de la matière sèche, et l'on comprime ensuite à chaud en présence d'une atmosphère inerte à l'égard du carbure de silicium ou sous dépression en appliquant une pression d'au moins 100 bars (10 MPa) à une température de 1 750 °C à 2 200 °C, jusqu'à formation de la pièce moulée en du carbure de silicium polycristallin, présentant une densité représentant au moins 99 % de la densité théorique du SiC, consistant en :

au moins 97,8 % en poids de carbure de silicium-bêta,
0,1 à 0,8 % en poids d'aluminium,
jusqu'à 0,8 % en poids d'azote et/ou de phosphore,
jusqu'à 0,3 % en poids d'oxygène,
jusqu'à 0,3 % en poids de carbone supplémentaire,

le carbure de silicium bêta étant présent sous forme d'une microstructure en une seule phase et les autres constituants présents essentiellement sous forme d'une solution solide dans le réseau de SiC-bêta, la pièce présentant une résistance à la rupture par flexion d'au moins 600 $N/mm^2$ jusqu'à 1 450 °C au moins, mesurée d'après la méthode des quatre points à une vitesse de charge d'au moins $3 N \times mm^{-2} \times sec^{-1}$, et présentant un mode de rupture surtout transcristalline.

2. Procédé selon la revendication 1, caractérisé en ce qu'on utilise une poudre de carbure de silicium exclusivement présente sous forme de la variété bêta.

3. Procédé selon l'une des revendications 1 et 2, caractérisé en ce qu'on utilise une poudre de carbure de silicium présentant une surface spécifique de contact de 4 à 20 $m^2/g$.

4. Procédé selon la revendication 1, caractérisé en ce qu'on utilise l'additif contenant de l'aluminium sous forme de poudre dont la granulométrie est de 10 µm et moins.

5. Procédé selon la revendication 4, caractérisé en ce qu'on utilise l'additif contenant de l'aluminium sous forme d'aluminium métallique ou sous forme d'un composé de l'aluminium.

6. Procédé selon la revendication 5, caractérisé en ce qu'on utilise comme composé de l'aluminium du nitrure d'aluminium et/ou du phosphure d'aluminium.

7. Procédé selon la revendication 1, caractérisé en ce qu'on effectue le frittage sous compression en opérant sous dépression, avec une pression de gaz inférieure à 50 mbars (5 000 Pa).

8. Procédé selon la revendication 1, caractérisé en ce qu'on effectue le frittage sous pression, en opérant en atmosphère de gaz protecteur.